Europäisches Patentamt

European Patent Office

Office européen des brevets

(19)

(11) **EP 1 553 490 A2**

(12) **EUROPEAN PATENT APPLICATION**

(43) Date of publication:
**13.07.2005 Bulletin 2005/28**

(51) Int Cl.$^7$: **G06F 7/58**

(21) Application number: **05250047.7**

(22) Date of filing: **07.01.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **07.01.2004 KR 2004000879**

(71) Applicant: **Samsung Electronics Co., Ltd.
Suwon-si, Gyeonggi-do (KR)**

(72) Inventor: **Baek, Yoo-jin
Seongnam-si Gyeonggi-do (KR)**

(74) Representative: **Mounteney, Simon James
Marks & Clerk
90 Long Acre
London WC2E 9RA (GB)**

(54) **Cryptographic apparatus, cryptographic method, and storage medium thereof**

(57)   A cryptographic apparatus, a cryptographic method, and a computer readable storage medium provide for conversion between Boolean-masked data and arithmetic-masked data in a manner that allows for a reduction in computational overhead and hardware overhead. The cryptographic apparatus comprises: a first masking circuit which receives a first random number and data and outputs first-masked data; and a second masking circuit which receives a second random number and the first-masked data output from the first masking circuit, and outputs second-masked data. The second masking circuit comprises: an AND circuit which performs an AND operation between the first-masked data and the second random number; a shift circuit which receives the output signal of the AND circuit, and shifts the received output signal in a predetermined direction by predetermined bits; and a subtractor which receives the first-masked data and the output signal of the shift circuit, performs arithmetic subtraction of the output of the shift circuit form the first-masked data, and outputs second-masked data. The first-masked data is Boolean-masked data and the second-masked data is arithmetic-masked data.

FIG. 1

EP 1 553 490 A2

**Description**

This application claims the priority of Korean Patent Application No. 2004-879, filed on January 7, 2004, in the Korean Intellectual Property Office, the disclosure of which is incorporated herein in its entirety by reference.

BACKGROUND OF THE INVENTION

1. Field of the Invention

The present invention relates to a cryptographic apparatus, and more particularly, to a cryptographic apparatus and method robust against differential power analysis (DPA) attack, and a computer readable storage medium for performing the cryptographic method.

2. Description of the Related Art

Cryptography was originally used in the defense and diplomatic fields to prevent compromise of national secrets. In the electronic age, financial institutions have long been using cryptography to manage electronic fund transfer. In addition, since the time when cryptography originally came into use in the economic and financial fields, it has been widely used for authentication of identification, encryption key management, digital signature, and identity verification.

Negligent management of decryption keys, predictability of passwords, or monitoring of keyboard inputs in communications networks may lead to a breach in security in the form of a decryption to an unauthorized person. Here, decryption indicates an activity in which an attempt is made to decrypt an encrypted text into a plaintext by determining a key that is originally used to encrypt the text when all information on the system such as the type of algorithm used for encrypting the plaintext and the operating system employed is known, but only the key used is unknown.

Common techniques for decryption include ciphertext-only attack, known plaintext attack, chosen plaintext attack, adaptively chosen plaintext attack, timing attack, and differential power analysis (DPA) attack.

The timing attack is a method in which it is determined whether the value of a predetermined bit is 0 or 1 using information related to the calculation time of an encryption algorithm, and based on the result, the encrypted text is decrypted. The DPA attack is a method in which according to the value of an input bit, the amount of power consumed by an encryption algorithm is analyzed, the bit values of a secret key are obtained, and then the encrypted text is decrypted.

Accordingly, as a method to prevent leakage of information as a result of such attacks, a masking method which converts certain data into random numbers is used. The masking method includes a technique that utilizes a Boolean operation and a technique that utilizes a combination of an arithmetic operation and a Boolean operation.

SUMMARY OF THE INVENTION

The present invention provides a cryptographic apparatus and a cryptographic method that are robust against DPA attack, and a computer readable storage medium for performing the cryptographic method.

According to an aspect of the present invention, there is provided a cryptographic apparatus comprising: an AND circuit which performs an AND operation between a random number and first-masked data; a shift circuit which receives the output signal of the AND circuit, and shifts the received signal by m bits (here, m is a natural number) in any one of a right-hand direction and a left-hand direction; and a subtractor which receives the first-masked data and the output signal of the shift circuit, performs arithmetic subtraction of the output signal of the shift circuit from the first-masked data, and as the result, outputs second-masked data.

According to another aspect of the present invention, there is provided a cryptographic apparatus comprising: an AND circuit which performs an AND operation between a random number and first-masked data; an exclusive OR (XOR) circuit which receives the output signal of the AND circuit and the random number, and performs an XOR operation between the output signal and the random number; a shift circuit which receives the output signal of the XOR circuit, and shifts the received signal by m bits (here, m is a natural number) in any one of a right-hand direction and a left-hand direction; and an adder which receives the first-masked data and the output signal of the shift circuit, performs arithmetic addition of the first-masked data and the output signal of the shift circuit, and as the result, outputs second-masked data.

According to still another aspect of the present invention, there is provided a cryptographic method comprising: receiving n-bit data and a first random number with an n-bit length, and outputting n-bit arithmetic-masked data, $a_n$, $a_{n-1}$, ..., $a_2$, $a_1$; and receiving a second random number with an n-bit length, $r_n$, $r_{n-1}$, ..., $r_2$, $r_1$, and the arithmetic-masked data , $a_n$, $a_{n-1}$, ..., $a_2$, $a_1$, and outputting n-bit Boolean-masked data, $y_n$, $Y_{n-1}$, ..., $y_2$, $y_1$, wherein the outputting arithmetic-masked data, $y_n$, $y_{n-1}$, ..., $y_2$, $y_1$, comprises: outputting $a_1$ as $y_1$; performing an AND operation between $y_1$ and $r_1$ and storing the result in a storage device, and performing an XOR operation between $a_2$ and the data stored in the storage device and outputting the result as $y_2$, and performing an AND operation between $a_2$ and the data stored in the storage device and generating the result as a carry; performing an AND operation between $y_{k-1}$ and $r_{k-1}$ and storing the result in the storage device, and performing an XOR operation between $a_k$ and the carry and an XOR operation between the data stored in the storage device and the carry, and outputting the re-

sult as $y_k$, and performing an OR operation between [the result of an AND operation between $a_k$ and the data stored in the storage device] and [the result of an AND operation between $a_k$ and the carry], and performing an OR operation between the OR operation result and [the result of the AND operation between the data stored in the storage device and the carry], and generating the result as the carry; and performing an AND operation between $y_{n-1}$ and $r_{n-1}$ and storing the result in the storage device, and performing an XOR operation between $a_n$ and the data storage in the storage device, and outputting the result as $y_n$, and predetermined variable k increases by 1 from 3 to (n-1).

A program for performing each step of the method can be stored in a computer readable storage medium.

BRIEF DESCRIPTION OF THE DRAWINGS

The above and other features and advantages of the present invention will become more apparent by describing in detail exemplary embodiments thereof with reference to the attached drawings in which:

    FIG. 1 is a block diagram of a cryptographic apparatus according to a preferred embodiment of the present invention;
    FIG. 2 is a first circuit diagram of a second masking block when the second masking block shown in FIG. 1 is a block converting Boolean-masked data into arithmetic-masked data, in accordance with the present invention;
    FIG. 3 is a second circuit diagram of a second masking block when the second masking block shown in FIG. 1 is a block converting Boolean-masked data into arithmetic-masked data, in accordance with the present invention; and
    FIG. 4 is a circuit diagram of the second masking block when the second masking block shown in FIG. 1 is a block converting arithmetic-masked data into Boolean-masked data, in accordance with the present invention.

DESCRIPTION OF THE PREFERRED EMBODIMENTS

The attached drawings for illustrating preferred embodiments of the present invention are referred to in order to gain a sufficient understanding of the present invention, the merits thereof, and the objectives accomplished by the implementation of the present invention.

Hereinafter, the present invention will be described in detail by explaining preferred embodiments of the invention with reference to the attached drawings. In the drawings, whenever the same element reappears in subsequent drawings, it is denoted by the same reference numeral.

Three algorithms have been proposed for converting Boolean masking into arithmetic masking.

Boolean masking of x for an n-bit binary series $x \in \{0,1\}^n$ means an ordered pair $(x', r) \in \{0,1\}^n$ x $\{0,1\}^n$ satisfying $x = x' \oplus r$ , where, "$\oplus$" represents an exclusive OR (XOR) operation. In this manner, the Boolean masking process operates to hide an original data element by performing an XOR between the original data and a predetermined random number.

Arithmetic masking of x for an n-bit binary series $x \in \{0,1\}^n$ means an ordered pair $(x', r) \in \{0,1\}^n \times \{0,1\}^n$ satisfying $x = x'$ mod r, where "mod" represents addition modulo $2^n$ or subtraction modulo $2^n$. In this manner, the arithmetic masking operates to hide an original data element by performing modulo addition or modulo subtraction with the original data and a predetermined random number.

In a method suggested by T. S. Messerges at the Fast Software Encryption Workshop (FSE), 2000, Boolean-masked (or arithmetic-masked) data is first converted randomly into the original data or logical complement data, and then converted into arithmetic-masked (or Boolean-masked) data again. However, it has been proven that this method cannot provide a complete countermeasure against DPA attack.

Meanwhile, in a method suggested by L. Goubin at the Workshop on Cryptographic Hardware and Embedded Systems (CHESS) 2001 5 n-bit XOR operations (here, n is a natural number) and 2 n-bit modular subtraction operations are employed to convert Boolean masking into arithmetic masking. Also, in this method, arithmetic masking can be converted into Boolean masking by using (2n + 4) n-bit XOR operations, (2n + 1) n-bit AND operations, and n n-bit left shift operations, However, this method doe not lend itself well to practical applications because of the large amount of processing overhead required.

Finally, in a method suggested by J. S. Coron, et al. at the CHESS Workshop, 2003, a table is calculated in advance in order to reduce the overhead of the Goubin algorithm for converting arithmetic masking into Boolean masking. However, there is inherent overhead in the required memory device.

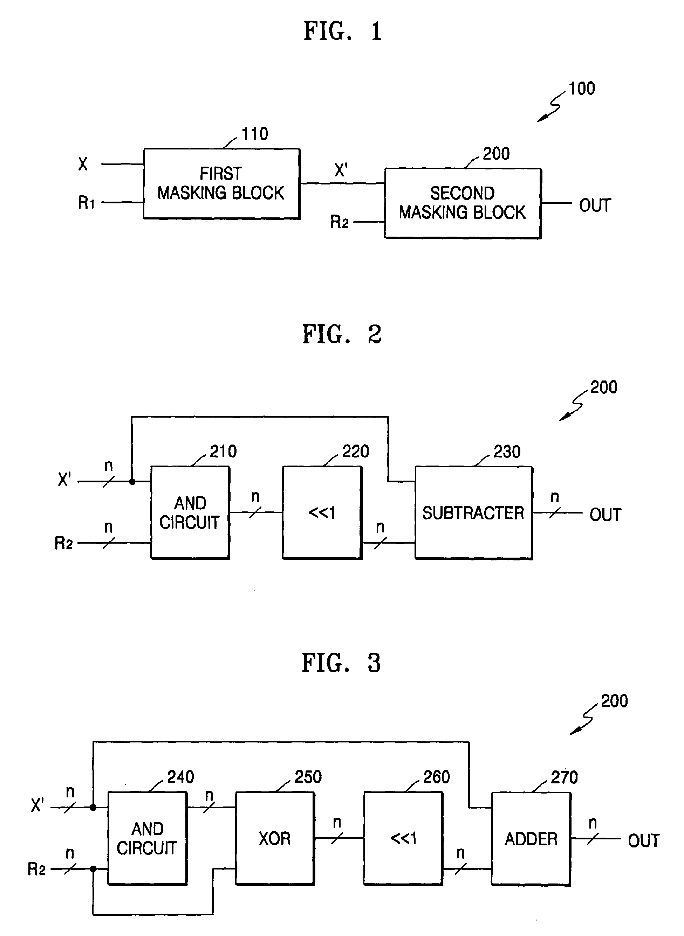

FIG. 1 is a block diagram of a cryptographic apparatus according to a preferred embodiment of the present invention. Referring to FIG. 1, the cryptographic apparatus 100 comprises a first masking block 110 and a second masking block 200.

When the first masking block 110 is a Boolean masking block, the second masking block 200 is an arithmetic masking block. That is, the first masking block 110 receives data (X) and a first random number (R1), converts the data (X) into Boolean-masked data (X') in response to the first random number (R1), and outputs the Boolean-masked data (X').

The second masking block 200 receives the Boolean-masked data (X') and a second random number (R2), converts the Boolean-masked data (X') into arithmetic-masked data (OUT) in response to the second random number (R2), and outputs the arithmetic-masked data (OUT). Here, it is preferable that the first random number (R1) and the second random number (R2) are an identical number.

However, when the first masking block 110 is an arithmetic masking block, the second masking block 200 is a Boolean masking block. That is, the first masking block 110 receives data (X) and a first random number (R1), converts the data (X) into arithmetic-masked data (X') in response to the first random number (R1), and outputs the arithmetic-masked data (X').

The second masking block 200 receives the arithmetic-masked data (X') and a second random number (R2), converts the arithmetic-masked data (X') into Boolean-masked data (OUT) in response to the second random number (R2), and outputs the Boolean-masked data (OUT). Here, it is preferable that the first random number (R1) and the second random number (R2) are an identical number.

FIG. 2 is a first circuit diagram of the second masking block when the second masking block shown in FIG. 1 is a block converting Boolean-masked data into arithmetic-masked data.

Referring to FIGS. 1 and 2, the operation of the second masking block 200 will now be described in further detail. First, a first algorithm which converts data to which Boolean masking is applied (hereinafter referred to as 'Boolean-masked data') into data to which arithmetic masking is applied (hereinafter referred to as 'arithmetic-masked data') according to a preferred embodiment of the present invention is as follows:

$$\text{Input}: X'(= X \oplus R1), R2$$

$$\text{Output}: OUT = X - R2$$

1. temp = $X' \wedge R2$
2. temp = (temp « 1)
3. Return ($X'$ - temp)

Here, " $\wedge$ " denotes an AND operation, "«" denotes logical shift left by 1 bit, "$\oplus$" denotes an XOR operation, and "-" denotes an arithmetic subtraction operation. Also, "temp" indicates temporary storage of data, and can be implemented by a data storage circuit including, for example, latches or registers.

FIG. 2 is an illustration of a hardware implementation of the algorithm for converting Boolean-masked data into arithmetic-masked data according to the present invention. In FIG. 2, the second masking block 200 comprises an AND circuit 210, a shift circuit 220, and a subtractor 230.

The AND circuit 210 receives Boolean-masked data (X') and the second random number (R2), performs a bitwise AND operation between the received data (X') and number (R2), and outputs the result of the AND operation to the shift circuit 220. Each of the Boolean-masked data (X') and the second random number (R2) comprises n bits.

The shift circuit 220 receives the n-bit data output from the AND circuit 210, shifts the data by m bits (here, m is a natural number, for example, m is 1) in either one of a left-hand direction and a right-hand direction. For example, the shift circuit 220 can perform a left shift by 1 bit. The output of the shift circuit 220 is provided to the subtractor 230.

The subtractor 230 receives the Boolean-masked data (X') and the output signal of the shift circuit 220, performs arithmetic subtraction of the output signal of the shift circuit 220 from the Boolean-masked data (X'), and outputs arithmetic-masked data (OUT) generated as a result of the shift operation. Accordingly, the cryptographic apparatus according to the present invention can provide a complete countermeasure against DPA attack.

FIG. 3 is a second circuit diagram of the second masking block when the second masking block shown in FIG. 1 is a block for converting Boolean-masked data into arithmetic-masked data.

Referring to FIGS. 1 and 3, the operation of the second embodiment of the second masking block 200 will now be described in further detail. A second algorithm which converts Boolean-masked data into arithmetic-masked data according to a preferred embodiment of the present invention is as follows:

$$\text{Input}: X'(= X \oplus R1), R2$$

$$\text{Output}: OUT = X + R2$$

1. temp $(X' \wedge R2) \oplus R2$
2. temp = (temp «1)
3. Return ($X'$ + temp)

Here, "+" denotes an arithmetic addition operation.

FIG. 3 is an illustration of a hardware implementation of the algorithm for converting Boolean-masked data into arithmetic-masked data according to the present invention. In FIG. 3, the second masking block 200 comprises an AND circuit 240, an XOR circuit 250, a shift circuit 260, and an adder 270.

The AND circuit 240 receives Boolean-masked data (X') and the second random number (R2), performs a bitwise AND operation between the received data (X') and number (R2), and outputs the result of the AND operation to the XOR circuit 250. Each of the Boolean-masked data (X') and the second random number (R2) comprises n bits.

The XOR circuit 250 receives the output signal of the AND circuit 240 and the second random number (R2), performs a bitwise XOR operation between the output signal of the AND circuit 240 and the second random number (R2), and outputs the result to the shift circuit 260.

The shift circuit 260 receives the n-bit data output from the XOR circuit 250, shifts the data by m bits (here, m is a natural number, for example, m is 1) in either one of a left-hand direction and a right-hand direction. For example, the shift circuit 260 can perform a left shift by 1 bit.

The adder 270 receives Boolean-masked data (X') and the output signal of the shift circuit 260, performs arithmetic addition of the data (X') and the output signal, and outputs arithmetic-masked data (OUT) generated as a result of the shift operation. Accordingly, the cryptographic apparatus according to the present invention provides a complete countermeasure against DPA attack.

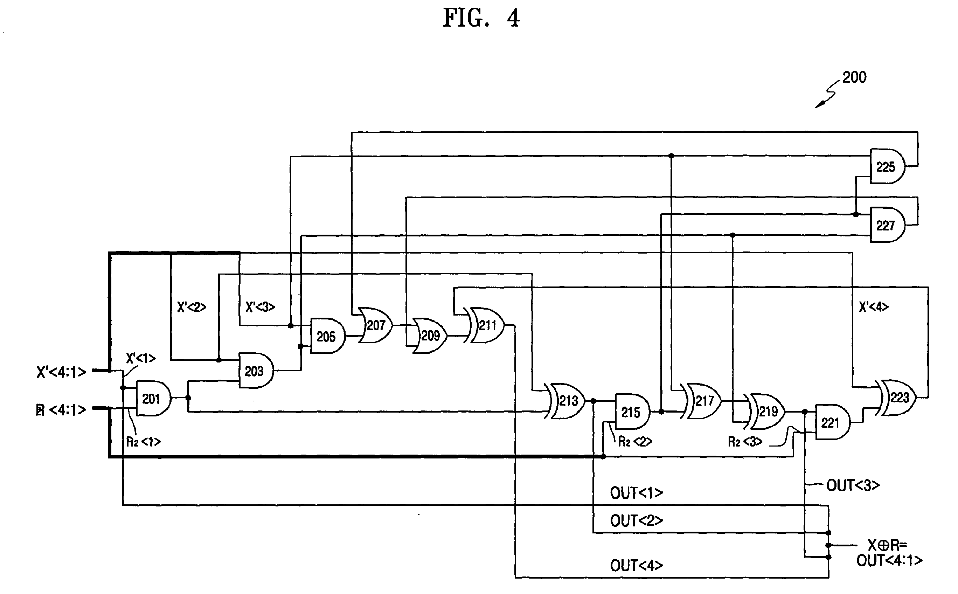

FIG. 4 is a circuit diagram of the second masking block when the second masking block shown in FIG. 1 is a block converting arithmetic-masked data into Boolean-masked data.

The algorithm converting arithmetic-masked data into Boolean-masked data according to a preferred embodiment of the present invention is as follows:

Input: $X'(= X - R2) = a_n,...,a_1$, $R2 = r_n,...,r_1$

Output: OUT $= X \oplus R2 = y_n,...,y_1$

1. $y_1 = a_1$;
2. temp $= y_1 \wedge r_1$

$$y_2 = a_2 \oplus temp$$

$$carry = a_2 \wedge temp$$

3. For k=3 to (n-1) by 1

$$temp = y_{k-1} \wedge r_{k-1};$$

$$y_k = a_k \oplus temp \oplus carry;$$

carry $= (a_k \wedge temp) \vee (a_k \wedge carry) \vee (temp \wedge carry)$;

4. temp $= y_{n-1} \wedge r_{n-1}$;

$$y_n = a_n \oplus temp \oplus carry;$$

5. Return $(y_n,...y_1)$

Here, " $\vee$ " denotes an OR operation, while "carry" denotes a carry. Accordingly, the algorithm converting arithmetic-masked data into Boolean-masked data can be implemented by using (2n-3) 1-bit XOR circuits, (4n-9) 1-bitAND circuits, and 2(n-3) 1-bit OR circuits.

FIG. 4 is an illustration of a hardware implementation of the algorithm for converting arithmetic-masked data into Boolean-masked data according to the present invention. That is, the second masking block 200 comprises a plurality of AND gates 201, 203, 205, 215, 221, 225, and 227, a plurality of OR gates 207 and 209, and a plurality of XOR gates 211, 213, 217, 219, and 223. In the circuit diagram of FIG. 4, the width n of the input and output data is equal to 4, for the convenience of explanation.

AND gate 201 performs an AND operation between LSB(X'<1>) of arithmetic-masked data (X<4:1>) and LSB(R2<1>) of the second random number (R2<4:1>), AND gate 203 performs an AND operation between the second bit (X'<2>) of the arithmetic-masked data (X'<4:1>) and the output signal of the AND gate 201, and AND gate 205 performs an AND operation between the third bit (X'<3>) of the arithmetic-masked data (X'<4:1>) and the output signal of the AND gate 203.

OR gate 207 performs an OR operation between the output signal of the AND gate 205 and the output signal of the AND gate 225, OR gate 209 performs an OR operation between the output signal of the OR gate 207 and the output signal of the AND gate 227, and XOR gate 211 performs an XOR operation between the output signal of the OR gate 209 and the output signal of the XOR gate 223.

XOR gate 213 performs an XOR operation between the output signal of the AND gate 201 and the second bit (X'<2>) of the arithmetic-masked data (X'<4:1>), and AND gate 215 performs an AND operation between the second bit (R2<2>) of the second random number (R2<4:1>) and the output signal of the XOR gate 213.

XOR gate 217 performs an XOR operation between the output signal of the AND gate 215 and the third bit (X'<3>) of the arithmetic-masked data (X'<4:1>), and XOR gate 219 performs an XOR operation between the output signal of the AND gate 203 and the output signal of the XOR gate 217.

AND gate 221 performs an AND operation between the third bit (R2<3>) of the second random number (R2<4:1>) and the output signal of the XOR gate 219, and XOR gate 223 performs an XOR operation between the output signal of the AND gate 221 and MSB(X'<4>) of the arithmetic-masked data (X'<4:1>). AND gate 225 performs an AND operation between the third bit (X'<3>) of the arithmetic-masked data (X'<4:1>) and the output signal of the AND gate 215, and AND gate 227 performs an AND operation between the output signal of the AND gate 215 and the output signal of the AND gate 203.

Accordingly, the least significant bit LSB (OUT<1>) of the output signal (X $\oplus$ R = OUT<4:1>) of the second masking block 200 is the same as the least significant bit LSB(X'<1>) of the arithmetic-masked data (X'<4:1>), and the second bit (OUT<2>) of the output signal (OUT<4:1>) of the second masking block 200 is the output signal of the XOR gate 213. The third bit (OUT<3>) of the output signal (OUT<4:1>) of the second masking block 200 is the output signal of the XOR gate 219, and the most significant bit MSB (OUT<4>) of the output signal (OUT<4:1 >) of the second masking block 200 is the output signal of the XOR gate 211.

Accordingly, the second masking block 200 according to the present invention can greatly reduce system and computational overhead as compared to the method suggested by L. Goubin in CHESS 2001. In addition, since the second masking block 200 according to the present invention does not utilize a lookup table that is calculated in advance, the second masking block 200 of the present invention does not require the overhead of an additional memory block, as is required by the method suggested by J. S. Coron, et al. in CHESS 2003.

The cryptographic apparatus according to the present invention can be applied to any of a number of apparatus that employ encryption technology, such as low-power-consumption apparatus, such as a smart card or other forms of active storage media. Furthermore, the cryptographic method and apparatus, and the recording medium thereof provide for complete countermeasures against DPA attack for an algorithm, or a hardware implementation of the algorithm, that utilizes Boolean operations and arithmetic operations at the same time.

As described above, the cryptographic apparatus and method of the present invention results in a reduction of computational and hardware overhead.

While the present invention has been particularly shown and described with reference to exemplary embodiments thereof, it will be understood by those of ordinary skill in the art that various changes in form and detail may be made herein without departing from the spirit and scope of the present invention as defined by the following claims.

**Claims**

1. A cryptographic apparatus comprising:

   an AND circuit which performs an AND operation between a random number and first-masked data;
   a shift circuit which receives an output signal of the AND circuit, and shifts the received signal by m bits (here, m is a natural number) in any one of a right-hand direction and a left-hand direction; and
   a subtractor which receives the first-masked data and an output signal of the shift circuit, performs arithmetic subtraction of the output signal of the shift circuit from the first-masked data, and outputs second-masked data as a result.

2. The cryptographic apparatus of claim 1, wherein the shift circuit shifts the output signal of the AND circuit by 1 bit in the left-hand direction.

3. A cryptographic apparatus comprising:

   an AND circuit which performs an AND operation between a random number and first-masked data;
   an exclusive OR (XOR) circuit which receives an output signal of the AND circuit and the random number, and performs an XOR operation between the output signal and the random number;
   a shift circuit which receives an output signal of the XOR circuit, and shifts the received signal by m bits (here, m is a natural number) in any one of a right-hand direction and a left-hand direction; and
   an adder which receives the first-masked data and an output signal of the shift circuit, performs arithmetic addition of the first-masked data and the output signal of the shift circuit, and outputs second-masked data as a result.

4. A cryptographic apparatus comprising:

   a first masking circuit which receives a first random number and data, and outputs Boolean-masked data; and
   a second masking circuit which receives a second random number and the Boolean-masked data output from the first masking circuit and outputs arithmetic-masked data,

   wherein the second masking circuit comprises:

   an AND circuit which performs an AND operation between the second random number and the Boolean-masked data;
   a shift circuit which receives an output signal of the AND circuit, and shifts the received signal by m bits (here, m is a natural number) in any one of a right-hand direction and a left-hand direction; and
   a subtractor which receives the Boolean-masked data and an output signal of the shift circuit, performs arithmetic subtraction of the output signal of the shift circuit from the Boolean-masked data, and outputs the arithmetic-masked data as a result.

5. The cryptographic apparatus of claim 4, wherein the shift circuit shifts the output signal of the AND circuit by 1 bit in the left-hand direction.

6. The cryptographic apparatus of claim 4, where the first and second random numbers are an identical number.

7. A cryptographic apparatus comprising:

a first masking circuit which receives a first random number and data, and outputs Boolean-masked data; and
a second masking circuit which receives a second random number and the Boolean-masked data output from the first masking circuit and outputs arithmetic-masked data,

wherein the second masking circuit comprises:

an AND circuit which performs an AND operation between the second random number and the Boolean-masked data;
an XOR circuit which receives an output signal of the AND circuit and the second random number, and performs an XOR operation between the output signal and the random number;
a shift circuit which receives an output signal of the XOR circuit, and shifts the received signal by m bits (here, m is a natural number) in any one of a right-hand direction and a left-hand direction; and
an adder which receives the Boolean-masked data and an output signal of the shift circuit, performs arithmetic addition of the Boolean-masked data and the output signal of the shift circuit, and outputs the arithmetic-masked data as a result.

8. The cryptographic apparatus of claim 7, wherein the shift circuit shifts the output signal of the AND circuit by 1 bit in a left-hand direction.

9. The cryptographic apparatus of claim 7, wherein the first and second random numbers are an identical number.

10. A cryptographic method comprising:

performing an AND operation between a random number and first-masked data;
receiving a result of the AND operation, and shifting the received result by m bits (here, m is a natural number) in any one of a right-hand direction and a left-hand direction; and
receiving the first-masked data and a result of the shifting, performing arithmetic subtraction of the result of the shifting from the first-masked data, and outputting second-masked data as a result.

11. A cryptographic method comprising:

performing an AND operation between a random number and first-masked data;
receiving a result of the AND operation and the random number, and performing an XOR operation between the AND operation result and the random number;
receiving a result of the XOR operation, and shifting the received signal by m bits (here, m is a natural number) in any one of a right-hand direction and a left-hand direction; and
receiving the first-masked data and a result of the shifting, performing arithmetic addition of the first-masked data and the result of the shifting, and outputting second-masked data as a result.

12. A computer readable recording medium having embodied thereon a computer program for a cryptographic method, wherein the cryptographic method comprises:

performing an AND operation between a random number and first-masked data;
receiving a result of the AND operation, and shifting the received result by m bits (here, m is a natural number) in any one of a right-hand direction and a left-hand direction; and
receiving the first-masked data and a result of the shifting, performing arithmetic subtraction of the result of the shifting from the first-masked data, and outputting second-masked data as a result.

13. A computer readable recording medium having embodied thereon a computer program for a cryptographic method, wherein the cryptographic method comprises:

performing an AND operation between a random number and first-masked data;
receiving a result of the AND operation and the random number, and performing an XOR operation between the AND operation result and the random number;
receiving a result of the XOR operation, and shifting the received signal by m bits (here, m is a natural number) in any one of a right-hand direction and a left-hand direction; and
receiving the first-masked data and a result of the shifting, performing arithmetic addition of the first-masked data and the result of the shifting, and outputting second-masked data as a result.

**14.** A cryptographic method comprising:

receiving a first random number and data, and outputting Boolean-masked data; and
receiving a second random number and the Boolean-masked data and outputting arithmetic-masked data,

wherein the outputting arithmetic-masked data comprises:

performing an AND operation between the second random number and the Boolean-masked data;
receiving a result of the AND operation, and shifting the received signal by m bits (here, m is a natural number) in any one of a right-hand direction and a left-hand direction; and
receiving the Boolean-masked data and a result of the shifting, performing arithmetic subtraction of the shifting result from the Boolean-masked data, and outputting the arithmetic-masked data as a result.

**15.** A cryptographic method comprising:

receiving a first random number and data, and outputting Boolean-masked data; and
receiving a second random number and the Boolean-masked data and outputting arithmetic-masked data,

wherein the outputting arithmetic-masked data comprises:

performing an AND operation between the second random number and the Boolean-masked data;
receiving a result of the AND operation and the random number, and performing an XOR operation between the AND operation result and the random number;
receiving a result of the XOR operation, and shifting the received signal by m bits (here, m is a natural number) in any one of a right-hand direction and a left-hand direction; and
receiving the Boolean-masked data and a result of the shifting, performing arithmetic addition of the Boolean-masked data and the shifting result, and outputting the arithmetic-masked data as a result.

**16.** A cryptographic method comprising:

receiving n-bit data and a first random number with an n-bit length, and outputting n-bit arith-

metic-masked data, $a_n$, $a_{n-1}$, ..., $a_2$, $a_1$; and
receiving a second random number with an n-bit length, , $r_n$, $r_{n-1}$, ..., $r_2$, $r_1$, and the arithmetic-masked data , $a_n$, $a_{n-1}$, ..., $a_2$, $a_1$, and outputting n-bit Boolean-masked data, $y_n$, $y_{n-1}$, ..., $y_2$, $y_1$,

wherein the outputting arithmetic-masked data, $y_n$, $y_{n-1}$, ..., $y_2$, $y_1$, comprises:

outputting $a_1$ as $y_1$;
performing an AND operation between $y_1$ and $r_1$ and storing the result in a storage device, and performing an XOR operation between $a_2$ and the data stored in the storage device and outputting the result as $y_2$, and performing an AND operation between $a_2$ and the data stored in the storage device and generating the result as a carry;
performing an AND operation between $y_{k-1}$ and $r_{k-1}$ and storing the result in the storage device, and performing an XOR operation between $a_k$ and the carry and an XOR operation between the data stored in the storage device and the carry, and outputting the result as $y_k$, and performing an OR operation between [the result of an AND operation between $a_k$ and the data stored in the storage device] and [the result of an AND operation between $a_k$ and the carry], and performing an OR operation between the OR operation result and [the result of the AND operation between the data stored in the storage device and the carry], and generating the result as the carry; and
performing an AND operation between $y_{n-1}$ and $r_{n-1}$ and storing the result in the storage device, and performing an XOR operation between $a_n$ and the data storage in the storage device, and outputting the result as $y_n$, and

wherein predetermined variable k increases by 1 from 3 to (n-1).

**17.** A cryptographic method for receiving an n-bit random number, $r_n$, $r_{n-1}$, ..., $r_2$, $r_1$, and arithmetic-masked data, $a_n$, $a_{n-1}$, ..., $a_2$, $a_1$, and outputting n-bit Boolean-masked data, $y_n$, $y_{n-1}$, ..., $y_2$, $y_1$, the method comprising:

outputting $a_1$ as $y_1$;
performing an AND operation between $y_1$ and $r_1$ and storing the result in a storage device, and performing an XOR operation between $a_2$ and the data stored in the storage device and outputting the result as $y_2$, and performing an AND operation between $a_2$ and the data stored in the storage device and generating the result as a carry;
performing an AND operation between $y_{k-1}$ and

$r_{k-1}$ and storing the result in the storage device, and performing an XOR operation between $a_k$ and the carry and an XOR operation between the data stored in the storage device and the carry, and outputting the result as $y_k$, and performing an OR operation between [the result of an AND operation between $a_k$ and the data stored in the storage device] and [the result of an AND operation between $a_k$ and the carry], and performing an OR operation between the OR operation result and [the result of the AND operation between the data stored in the storage device and the carry], and generating the result as the carry; and
performing an AND operation between $y_{n-1}$ and $r_{n-1}$ and storing the result in the storage device, and performing an XOR operation between $a_n$ and the data storage in the storage device, and outputting the result as $y_n$, and

wherein predetermined variable k increases by 1 from 3 to (n-1).

18. A computer readable recording medium having embodied thereon a computer program for a cryptographic method comprising:

receiving n-bit data and a first random number with an n-bit length, and outputting n-bit arithmetic-masked data, $a_n$, $a_{n-1}$, ..., $a_2$, $a_1$; and receiving a second random number with an n-bit length, , $r_n$, $r_{n-1}$, ..., $r_2$, $r_1$ , and the arithmetic-masked data , $a_n$, $a_{n-1}$, ..., $a_2$, $a_1$, and outputting n-bit Boolean-masked data, $y_n$, $y_{n-1}$, ..., $y_2$, $y_1$,

wherein the outputting arithmetic-masked data, $y_n$, $y_{n-1}$, ..., $y_2$, $y_1$, comprises:

outputting $a_1$ as $y_1$;
performing an AND operation between $y_1$ and $r_1$ and storing the result in a storage device, and performing an XOR operation between $a_2$ and the data stored in the storage device and outputting the result as $y_2$, and performing an AND operation between $a_2$ and the data stored in the storage device and generating the result as a carry;
performing an AND operation between $y_{k-1}$ and $r_{k-1}$ and storing the result in the storage device, and performing an XOR operation between $a_k$ and the carry and an XOR operation between the data stored in the storage device and the carry, and outputting the result as $y_k$, and performing an OR operation between [the result of an AND operation between $a_k$ and the data stored in the storage device] and [the result of an AND operation between $a_k$ and the carry], and performing an OR operation between the OR operation result and [the result of the AND operation between the data stored in the storage device and the carry], and generating the result as the carry; and
performing an AND operation between $y_{n-1}$ and $r_{n-1}$ and storing the result in the storage device, and performing an XOR operation between $a_n$ and the data storage in the storage device, and outputting the result as $y_n$, and

wherein predetermined variable k increases by 1 from 3 to (n-1).

19. A computer readable recording medium having embodied thereon a computer program for a cryptographic method for receiving an n-bit random number, $r_n$, $r_{n-1}$, ..., $r_2$, $r_1$, and arithmetic-masked data, $a_n$, $a_{n-1}$, ..., $a_2$, $a_1$, and outputting n-bit Boolean-masked data, $y_n$, $y_{n-1}$, ..., $y_2$, $y_1$, wherein the cryptographic method comprises:

outputting $a_1$ as $y_1$;
performing an AND operation between $y_1$ and $r_1$ and storing the result in a storage device, and performing an XOR operation between $a_2$ and the data stored in the storage device and outputting the result as $y_2$, and performing an AND operation between $a_2$ and the data stored in the storage device and generating the result as a carry;
performing an AND operation between $y_{k-1}$ and $r_{k-1}$ and storing the result in the storage device, and performing an XOR operation between $a_k$ and the carry and an XOR operation between the data stored in the storage device and the carry, and outputting the result as $y_k$, and performing an OR operation between [the result of an AND operation between $a_k$ and the data stored in the storage device] and [the result of an AND operation between $a_k$ and the carry], and performing an OR operation between the OR operation result and [the result of the AND operation between the data stored in the storage device and the carry], and generating the result as the carry; and
performing an AND operation between $y_{n-1}$ and $r_{n-1}$ and storing the result in the storage device, and performing an XOR operation between $a_n$ and the data storage in the storage device, and outputting the result as $y_n$, and

wherein predetermined variable k increases by 1 from 3 to (n-1).

FIG. 1

100

110

X —— | FIRST MASKING BLOCK | —— X'

R₁ ——

200

X' —— | SECOND MASKING BLOCK | —— OUT

R₂ ——

FIG. 2

200

X' —— $n$ —— | AND CIRCUIT 210 | —— $n$ —— | <<1 220 | —— $n$ —— | SUBTRACTER 230 | —— $n$ —— OUT

R₂ —— $n$ ——

FIG. 3

200

X' —— $n$ —— | AND CIRCUIT 240 | —— $n$ —— | XOR 250 | —— $n$ —— | <<1 260 | —— $n$ —— | ADDER 270 | —— $n$ —— OUT

R₂ —— $n$ ——

FIG. 4

EP 1 553 490 A2